## Europäisches Patentamt

## European Patent Office

## Office européen des brevets

(19)

(11) Veröffentlichungsnummer: **0 177 883**
**B1**

(12) **EUROPÄISCHE PATENTSCHRIFT**

(45) Veröffentlichungstag der Patentschrift: **18.07.90**

(51) Int. Cl.⁵: **H 04 L 27/22**

(21) Anmeldenummer: **85112423.0**

(22) Anmeldetag: **01.10.85**

(54) Anordnung zur Trägerrückgewinnung aus empfangenen 2 PSK-Signalen.

(30) Priorität: **04.10.84 DE 3436436**

(43) Veröffentlichungstag der Anmeldung:
**16.04.86 Patentblatt 86/16**

(45) Bekanntmachung des Hinweises auf die
Patenterteilung:
**18.07.90 Patentblatt 90/29**

(84) Benannte Vertragsstaaten:
**AT BE CH DE FR GB IT LI NL SE**

(56) Entgegenhaltungen:
**EP-A-0 106 163**
**DE-C-2 065 287**
**GB-A-2 096 420**
**US-A-2 167 480**
**US-A-3 753 114**
**US-A-4 201 948**

**WESCON TECHNICAL PAPERS, Band 11, Nr. 2,
Heft 1/1, 22.-25. August 1967, Seiten 1-10,
North-Hollywood, US; R. SEYMOUR: "A
monolithic RF/IF amplifier and its applications"**

(73) Patentinhaber: **Siemens Aktiengesellschaft
Wittelsbacherplatz 2
D-8000 München 2 (DE)**

(72) Erfinder: **Thanhäuser, Gerhard, Dipl.-Ing.
Mozartstrasse 9
D-8905 Mering (DE)**
Erfinder: **Langer, Alfred, Dipl.-Ing.
Benediktenwandstrasse 20
D-8000 München 90 (DE)**

Courier Press, Leamington Spa, England.

## Beschreibung

Die Erfindung betrifft eine Anordnung zur Trägerrückgewinnung entsprechend dem Oberbegriff des Patentanspruchs 1. Unter 2 PSK-Signalen werden dabei phasensprungmodulierte Signale verstanden, bei denen die Phasenlage eines Trägers nur die Werte von etwa 0° oder etwa 180° aufweist.

Die Übertragung von Signalen mittels Phasensprungmodulation ist seit langem bekannt. Die Übertragung digitaler Signale erfolgt in der Regel als 2 PSK- oder 4 PSK-Signal, wobei also die Phasenlage eines Trägers zwischen zwei oder vier diskreten Werten umgeschaltet wird. Handelt es sich bei dem digitalen Signal beispielsweise um ein Binärsignal mit einer angenäherten Gleichverteilung von logischen Einsen und logischen Nullen, so sind beim 2 PSK-Signal die Phasenlagen des Trägers von 0° und 180° annähernd gleichhäufig vertreten, so daß die Amplitude des Trägers nahezu Null ist. Es ist aber bekannt, daß die Demodulation eines 2 PSK-Signales in einem gestörten Kanal bezüglich des Signal-Geräuschabstandes bzw. der Bitfehlerrate des rückgewonnen Binärsignals nur dann optimal sein kann, wenn für die Demodulation ein Synchrondemodulator mit phasenrichtig zugeführtem Träger verwendet wird. Damit ergibt sich die Notwendigkeit, aus dem empfangenen PSK-Signal den Träger zurückzugewinnen.

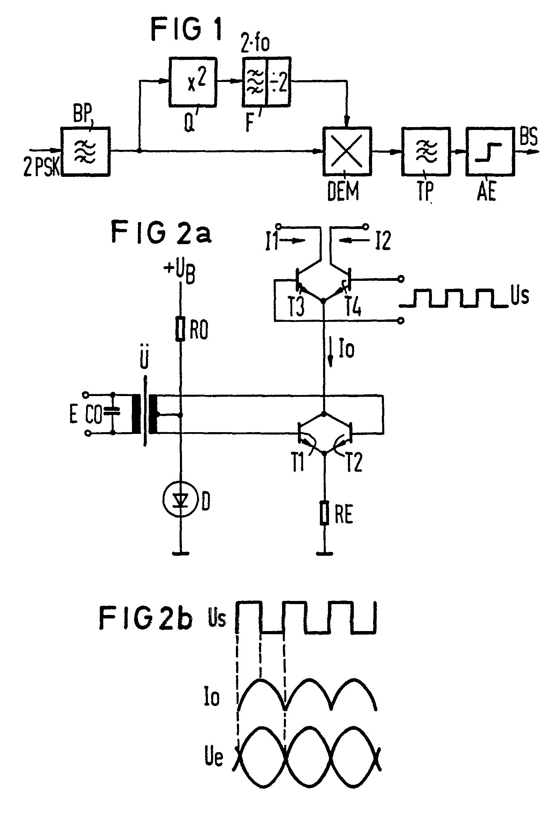

In der Fig. 1 ist eine bekannte Anordnung zur Trägerrückgewinnung für ein 2 PSK-Signal dargestellt. Empfangsseitig ist zunächst ein Bandpaß BP angeordnet, dessen Ah 1 Or/02.10.1984 Mittenfrequenz gleich der Trägerfrequenz und dessen Bandbreite mindestens zweimal der Taktfrequenz bzw. der Nyquistfrequenz des Binärsignals ist. Das Ausgangssignal des Bandpasses wird zum einen dem Signaleingang eines Synchrondemodulators DEM und zum anderen dem Eingang eines Doppelweggleichrichters oder Quadrierers Q zugeführt. Bei der Quadrierung wird das vorgefilterte 2 PSK-Signal mit sich selbst multipliziert, dabei entstehen auch Summenfrequenzen aller spektralen Anteile im oberen und unteren Seitenband. Die Anteile, die symmetrisch zum unterdrückten Träger liegen, treten bei der doppelten Trägerfrequenz auf, sie addieren sich wegen der Korrelation des oberen und des unteren Seitenbandes. Diese Energieanteile bei der doppelten Trägerfrequenz werden in einem schmalbandigen Trägerfrequenzfilter F von den bei der Quadrierung entstandenen unerwünschten Mischprodukten weitgehend befreit und an einen nachgeschalteten Amplitudenbegrenzer abgegeben. Nach der Amplitudenbegrenzung erfolgt in einem Frequenzteiler im Teilungsverhältnis 2:1 die Erzeugung des Trägers, der an den Trägereingang des Synchrondemodulators DEM abgegeben wird. Im Synchrondemodulator erfolgt die Demodulation des 2 PSK-Eingangssignals, an dem Demodulatorausgang ist über einen Tiefpaß ein Amplitudenentscheider AE angeschlossen, von dem ein binäres Signal BS abgegeben wird.

Im Synchrondemodulator wird eine Multiplikation des empfangsseitig rückgewonnenen Trägers mit dem Signal vorgenommen, eine optimale Demodulation des 2 PSK-Signals mit maximalem Signal-Geräuschabstand ergibt sich nur bei richtiger Phasenlage des zurückgewonnenen Träger. Da die Phase des rückgewonnenen Trägers bei allen Trägerrückgewinnungsschaltungen für 2 PSK-Signale wegen der Ableitung aus der Korrelation der Signalseitenbänder bzw. wegen der 2:1 Frequenzteilung 0° oder 180° betragen kann ist der erzeugte Träger mit dieser Unsicherheit behaftet. Bei der Übertragung von 2 PSK-Signalen wird zur Umgehung dieser Unsicherheit deshalb in der Regel als modulierendes Binärsignal ein Signal im Differenz-Binärcode verwendet, bei dem die Information in den Signalwechseln übertragen wird.

Aus der US-A-2 167 408 ist bereits ein Synchrondemodulator für 2 PSK-Signale mit einer Anordnung zur Trägerrückgewinnung bekannt, die einen eingangsseitigen Bandpaß mit einstellbarer Phase zur Phasenkorrektur und diesem nachgeschaltet einen Frequenzverdoppler mit angeschlossenem Phasendiskriminator enthält. Durch den Phasendiskriminator wird die Temperatur von 2 Schwingquarzen verändert, die jeweils in einem quarzstabilisierten Oszillator angeordnet sind. Die Ausgangssignale der beiden Oszillatoren ergeben durch Mischung eine Differenzfrequenz die der gewünschten Trägerfrequenz entspricht. Die Ausgangssignale der beiden Oszillatoren werden dazu einer Gegentaktstufe zugeführt, die zusätzlich ein die zweite Harmonische der Trägerfrequenz enthaltendes Ausgangssignal des Phasendiskriminators zur phasenmäßigen Synchronisierung des erzeugten Trägerfrequenzsignals erhält.

Beim bekannten Stand der Technik ergibt sich ein vergleichsweise hoher Aufwand für die Trägerrückgewinnung, da hierfür unter anderem Filter benötigt werden, die hinsichtlich Phasenstabilität des rückgewonnenen Trägers bei gleichzeitig hoher Selektion hohe Temperatur- und Alterungsbeständigkeit aufweisen müssen.

Die Aufgabe der Erfindung besteht also darin, eine gegenüber dem Stande der Technik vereinfachte Anordnung zur Trägerrückgewinnung aus empfangenen 2 PSK-Signalen zu finden.

Erfindungsgemäß wird die Aufgabe durch eine Anordnung der eingangs erwähnten Art gelöst, die durch die Merkmale entsprechend dem Kennzeichen des Patentanspruchs 1 weitergebildet ist. Der Vorteil der erfindungsgemäßen Anordnung liegt insbesondere darin, daß die Quadrierung des 2 PSK-Eingangssignales, eine offsetfreie Phasenregelung und eine Amplitudenregelung von einer einzigen Anordnung vorgenommen werden, die als kombinierter Phasen-Amplituden-Vergleicher wirkt und eine Phasenregelschleife darstellt. Vorteilhafte Weiterbildungen der erfindungsgemäßen Anordnung sind in den Patentansprüchen 2-4 beschrieben.

Die Erfindung soll im folgenden anhand der Zeichnung näher erläutert werden.

In der Zeichnung zeigt

Fig. 1 eine bekannte Anordnung zur Demodulation von 2 PSK-Signalen mit einer Anordnung zur Trägerrückgewinnung,

Fig. 2 die Prinzipschaltung der erfindungsgemäßen Anordnung zur Trägerrückgewinnung mit einem Phasendiagramm und

Fig. 3 eine detaillierte Schaltung der erfindungsgemäßen Anordnung zur Trägerrückgewinnung.

In der Fig. 2a ist in einer Prinzipschaltung ein Teil der erfindungsgemäßen Anordnung zur Trägerrückgewinnung dargestellt. Mit einem Eingang E für das Eingangssignal sind die beiden Primärwicklungsanschlüsse eines Übertragers Ü sowie die beiden Anschlüsse eines Kondensators CO verbunden. In Verbindung mit dem Kondensator wirkt die Induktivität des Übertragers Ü als Bandpaß, die Sekundärwicklung dieses Übertragers ist mittelangezapft, die Mittelanzapfung ist mit einem Basisspannungsteiler verbunden, der durch einen an die Betriebsspannung +U$_B$ angeschlossenen Widerstand RO und eine mit Bezugspotential verbundene Diode D gebildet wird. Die beiden äußeren Anschlüsse der Sekundärwicklung des Übertragers Ü sind jeweils mit einem Basisanschluß eines ersten bzw. zweiten Transistors T1, T2 verbunden, deren Emitteranschlüsse miteinander und über einen Widerstand RE mit Bezugspotential verbunden sind. Die beiden Transistoren, deren Schwellenspannung durch die Diode D kompensiert wird, werden also im Gegentakt angesteuert. Da die Kollektoranschlüsse beider Transistoren miteinander verbunden sind, ergibt sich ein Kollektorsummenstrom Io der dem Absolutwert der Eingangsspannung und dem Kehrwert des Widerstandes RE proportional ist. Damit liegt bereits eine Doppelweggleichrichtung für das Signal am Eingang E vor. Durch die Doppelweggleichrichtung ergibt sich hinsichtlich der Welligkeit des Stromes Io die doppelte Frequenz gegenüber der des Eingangssignals, es liegt also ein Signal mit der doppelten Trägerfrequenz vor, so daß die Quadriererfunktion bereits realisiert ist. Mit den verbundenen Kollektoranschlüssen der beiden Transistoren T1 und T2 sind die Emitteranschlüsse eines dritten und eines vierten Transistors T3, T4 verbunden, den Basisanschlüssen beider Transistoren wird eine zueinander um 180° phasenverschobene symmetrische Rechteckspannung Us mit der doppelten Trägerfrequenz zugeführt. Durch diese Rechteckspannung wird der dritte und der vierte Transistor T3, T4 umgeschaltet, so daß über die Kollektoranschlüsse dieser Transistoren zueinander phasenverschobene Ströme I1, I2 fließen. Die Differenz der Mittelwerte dieser Ströme ist dabei eine Funktion der Phasenverschiebung zwischen der Komponente mit der doppelten Trägerfrequenz im zusammengefaßten Kollektorstrom Io der ersten beiden Transistoren T1, T2 und der Rechteckspannung Us.

In der Fig. 2b sind übereinander die Eingangsspannung Ue, der Kollektorsummenstrom Io der beiden ersten Transistoren und die dem dritten und vierten Transistor T3, T4 umschaltender Rechteckspannung Us dargestellt.

In der Zeichnung ist die Phase der Rechteckspannung Us im Hinblick auf die Phase des Grundwellenanteils im Summenstrom Io um 90° verschoben, die Differenz der Gleichstrommittelwerte der Kollektorströme I1, I2 des dritten und des vierten Transistors T3, T4 ist hierbei gleich Null. Die Differenz der Kollektorströme I1, I2 der beiden Transistoren T3, T4 ist ein Ausdruck der Phasenlage zwischen Rechteckspannung Us und Eingangsspannung Ue mit angenäherter Sinuscharakteristik und kann als Regelkriterium in einer Phasenregelschleife verwendet werden, außerdem ist aber die Summe dieser beiden Ströme gleich dem Summenstrom Io, dessen Gleichstrommittelwert der Eingangsspannung Ue proportional ist und sich damit als Regelkriterium für eine eingangsseitige Amplitudenregelung anbietet.

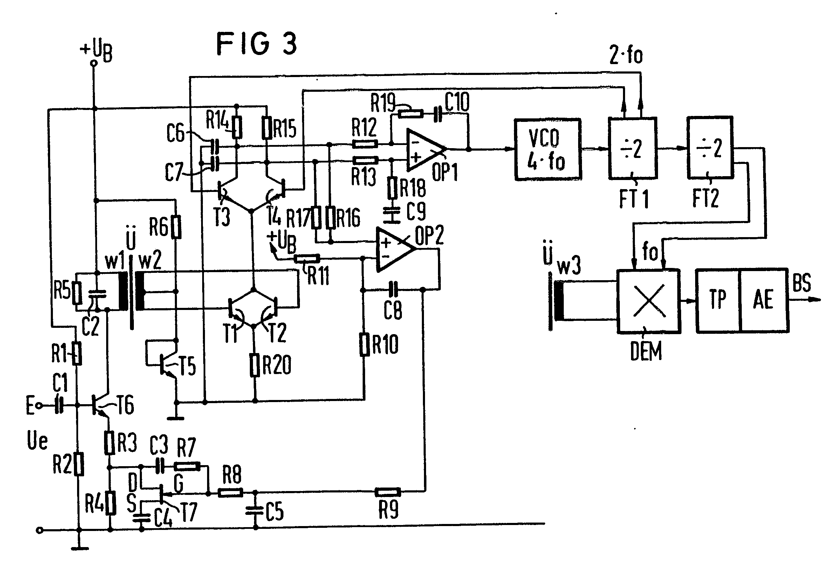

Die in der Fig. 3 detailliert dargestellte Anordnung zur Trägerrückgewinnung enthält neben den beiden, aus den Transistoren T1 ... T4 gebildeten emittergekoppelten Verstärkern und einem als Diode geschalteten fünften Transistor T5 eine, einen sechsten Transistor T6 enthaltende Vorverstärkerstufe. Der Eingang E ist über einen ersten Kondensator C1 mit dem Basisanschluß des sechsten Transistors T6 verbunden, die Basisvorspannung wird für diesen Transistor mittels eines aus einem ersten und einem zweiten Widerstand R1, R2 gebildeten Basisspannungsteilers erzeugt. Der Emitteranschluß dieses Transistors ist über die Reihenschaltung eines dritten und eines vierten Widerstandes mit Bezugspotential verbunden, außerdem ist am dritten Widerstand R3 der Drainanschluß eines siebenten Transistors T7 zur Verstärkungsregelung angeschlossen. Der Kollektoranschluß des sechsten Transistors T6 ist mit dem einen Anschluß der Primärwicklung des Übertragers Ü verbunden, deren anderer Anschluß an die Betriebsspannung +U$_B$ angeschlossen ist. Der Primärwicklung ist zusätzlich ein zweiter Kondensator C2 und ein fünfter Widerstand R5 parallelgeschaltet. Der Mittelanschluß der Sekundärwicklung des Übertragers ist einerseits über einen sechsten Widerstand R6 mit der Betriebsspannungsquelle +U$_B$ und andererseits über einen als Diode geschalteten fünften Transistor T5 mit Bezugspotential verbunden, so daß sich der in Fig. 2 bereits dargestellte Basisspannungsteiler für den ersten und den zweiten Transistor T1, T2 ergibt. Die Kollektoranschlüsse dieser beiden Transistoren sind entsprechend der Fig. 2a mit den zusammengefaßten Emitteranschlüssen des dritten und des vierten Transistors T3, T4 verbunden, die Kollektoranschlüsse dieser beiden Transistoren sind über einen sechsten bzw. siebten Kondensator C6, C7 mit Bezugspotential verbunden. Der Kollektoranschluß des dritten Transistors T3 ist außerdem über einen zwölften Widerstand R12 mit dem invertierenden Eingang und der Kollektoranschluß des vierten Transistors T4 ist über einen dreizehnten Widerstand R13 mit dem nichtinvertierenden Eingang eines ersten Operationsverstärkers OP1 verbunden. Die Kolektoranschlüsse der beiden Transistoren T3, T4 sind ausserdem über einen vierzehnten bzw. fünfzehnten Widerstand R14, R15 an Betriebsspannung +U$_B$ angeschlossen und über einen sechzehnten bzw. siebzehnten Widerstand R16, R17 mit dem nichtinvertierenden Eingang eines zweiten Operationsverstärkers OP2 verbunden. Der invertierende Eingang dieses zweiten Operationsverstärkers ist über einen zehnten Widerstand R10 mit Bezugspotential, über einen elften Widerstand R11 mit der Betriebsspannung +U$_B$ sowie über einen achten Kondensator C8 mit dem Ausgang des zweiten Operationsverstärkers OP2 verbunden. Dieser Ausgangsanschluß ist ausserdem über ein Siebglied aus einem neunten Widerstand R9 und einen fünften Kondensator C5 sowie einem achtem Widerstand R8 mit dem Gateanschluß des siebten Transistors T7 verbunden, dieser Gateanschluß ist außerdem über die Reihenschaltung eines dritten Kondensators C3 und eines siebten Widerstands R7 mit dem Drainanschluß dieses Transistors verbunden, dessen Sourceanschluß über einen vierten Kondensator C4 mit Bezugspotential verbunden ist. Die zusammengefaßten Emitteranschlüsse des ersten, des zweiten Transistor T1, T2 sind über einen zwanzigsten Widerstand R20 mit Bezugspotential verbunden.

Der nichtinvertierende Eingang des ersten Operationsverstärkers ist über die Reihenschaltung eines neunten Kondensators C9 und eines achzehnten Widerstandes R18 mit Bezugspotential verbunden, während der invertierende Eingang dieses Operationsverstärkers über einen zehnten Kondensator C10 und einen neunzehnten Widerstand R19 mit dem Ausgang dieses Operationsverstärkers verbunden ist. An diesen Ausgang ist ein spannungsgekoppelter Oszillator VCO angeschlossen, der eine Schwingung mit einer Frequenz entsprechend der vierfachen Trägerfrequenz 4 × fo erzeugt. An den Ausgangsanschluß dieses Oszillators ist ein erster Frequenzteiler FT1 mit einem Teilerverhältnis von 2:1 angeschlossen, die beiden zueinander komplementären Ausgänge dieses Frequenzteilers sind mit den Basisanschluß des dritten bzw. des vierten Transistors T3, T4 verbunden und führen diesen Anschlüssen die in der Fig. 2 dargestellte Rechteckspannung Us mit einer Frequenz entsprechend der doppelten Trägerfrequenz zu. Mit einem Ausgangsanschluß dieses Frequenzteilers ist weiterhin der Eingang eines zweiten Frequenzteilers FT2 verbunden, dieser Frequenzteiler mit einem Teilerverhältnis von 2:1 erzeugt den gewünschten Träger, seine beiden komplementären Ausgänge sind mit zugeordneten Eingängen des Synchrondemodulators DEM entsprechend der Fig. 1 verbunden, außerdem sind die Signaleingänge dieses Demodulators mit Anschlüssen einer weiteren Sekundärwicklung w3 des Übertragers Ü verbunden. An den Demodulator DEM schließen sich der Tiefpaß TP und der Amplitudenentscheider AE entsprechend der Fig. 1 an.

Die Wirkungsweise der Anordnung zur Trägerrückgewinnung ist im Prinzip anhand der Fig. 2 erläutert, nachfolgend soll auf Details eingegangen werden. Das 2 PSK-Signal wird über den Koppelkondensator C1 den Basisanschluß des Verstärkertransistors T6 zugeführt, in dessen Kollektorkreis der schon beschriebene Bandpaß liegt. Die Bandbreite dieses Bandpasses wird durch den fünften Widerstand R5 so eingestellt, daß sie etwa der doppelten Taktfrequenz des Datensignals entspricht, mit dem der Träger moduliert wurde. Die Mittenfrequenz des Bandpasses entspricht der Frequenz des Trägers fo. Der kombinierte Phasen-Amplitudenregler besteht entsprechend der Fig. 2 aus den Transistoren T1, T2 sowie T3, T4. Der Transistor T5 ist zur Kompensation der Schwellenspannungen der Transistoren T1, T2 als Diode geschaltet. Diese Transistoren T1 bis T5 sind beim Ausführungsbeispiel aus Gründen des geringeren Offsets gemeinsam monolithisch integriert.

Wie bereits in Verbindung mit Fig. 2 beschrieben, fließt im gemeinsamen Emitterwiderstand der Transistoren T1, T2 sowie in der gemeinsamen Kollektorleitung ein Strom mit der doppelten Trägerfrequenz. Dieser Strom wird durch eine Rechteckdifferenzspannung an den Basisanschlüssen des dritten und des vierten Transistors T3, T4 zwischen diesen beiden Transistors umgeschaltet. Die dafür benötigte Umschaltspannung mit der doppelten Trägerfrequenz 2fo wird vom ersten Frequenzteiler FT1 erzeugt, der dem steuerbaren Oszillator VCO nachgeschaltet ist. Durch diese Erzeugung mittels Frequenzteiler werden exakt symmetrische Ansteuerungsspannungen erzeugt. Die Kollektorwiderstände R14, R15 der Transistoren T3, T4 haben gleiche Widerstandswerte und bilden mit den ebenfalls gleich großen Kondensatoren C6, C7 jeweils einen Tiefpaß. Die Differenz der Kollektorspannungen der Transistoren T3, T4 ist proportional der Phasenabweichung zwischen der Umschaltspannung Us an den Basisanschlüssen des dritten und des vierten Transistors T3, T4 und der im zusammengefaßten Kollektorstrom des ersten und des zweiten Transistors T1, T2 enthaltenen Signalkomponente mit der doppelten Trägerfrequenz 2fo. Damit stellt die beschriebene Anordnung den Phasendemodulator der Phasenregelschleife zur Trägerrückgewinnung dar. Der erste Operationsverstärker OP1 bildet das aktive Schleifenfilter der Phasenregelschleife, in dem die Spannungsdifferenz der Kollektorspannungen des dritten und des vierten Transistors T3, T4 in eine Steuerspannung zur Frequenzregelung des steuerbaren Oszillators VCO umgeformt wird. Der erste Operationsverstärker OP1 ist dabei als Symmetrie-Unsymmetriewandler beschaltet, so daß nur die Differenz der Kollektorspannungen der Transistoren T3, T4 ausgewertet wird. Neben dem Kondensatorpaar C9, C10 sind deshalb auch die Widerstandspaare R12, R13 sowie R18, R19 jeweils gleich groß dimensioniert.

Das durch den ersten Operationsverstärker OP1 gebildete aktive Schleifenfilter besitzt eine Proportional-Integral Charakteristik (PI-Verhalten), damit muß der statische Wert der Spannungsdifferenz im gesamten Nachführbereich der Phasenregelschleife 0 sein, so daß die relative Phasenlage zwischen der Schaltspannung Us und dem Eingangssignal Ue im eingerasteten Zustand konstant bleibt, so wie dies in Fig. 2b dargestellt ist. Die mit den Nulldurchgängen des Eingangssignals zeitgleichen Flanken der Umschaltspannung Us können deshalb zur Ansteuerung eines zweiten Frequenzteilers verwendet werden, der die gewünschte Trägerfrequenz mit den exakten Phasenlagen von 0° oder 180° in Bezug auf das 2 PSK-Signal erzeugt.

Durch Multiplikation des verstärkten Eingangssignals und des rückgewonnenen Trägers wird im Synchrondemodulator DEM ein binäres Signal erzeugt, daß über den Tiefpaß TP dem Amplitudenentscheider E zugeführt und von diesem in ein Rechtecksignal umgeformt wird. Der Tiefpaß TP bildet dabei mit dem Eingangsbandpaß am Übertrager die gesamte Selektion beim Ausführungsbeispiel wurde die Bandbreite des Eingangsbandpasses um den Faktor 2 größer als die Taktfrequenz gewählt, so daß Praktisch die gesamte trägerfrequente Selektion in den Tiefpaß TP verlagert wird. Dadurch ergibt sich die Funktion eines Nachlauffilters (tracking filter), dessen Mittenfrequenz immer gleich der Trägerfrequenz ist. Damit tritt das Problem einer Verstimmung der Mittenfrequenz von Bandpässen mit der daraus resultierenden Umwandlung von Amplituden in Phasenmodulation nicht mehr auf.

Neben der Differenz der Kollektorspannungen der Transistoren T3, T4 ist für die beschriebene Trägerrückgewinnungsschaltung auch der arithmetische Mittelwert der Kollektorspannungen von Bedeutung. Dieser Mittelwert ist von der Phasenlage zwischen Schaltspannung Us und Summkollektorstrom der Transistoren T1, T2 vollständig unabhängig, er ist jedoch ein direktes Maß für die Eingangsspannung und kann damit als Regelkriterium für eine eingangsseitige Pegelregelung dienen. Zur Pegelregelung ist der zweite Operationsverstärker OP2 vorgesehen, der an seinem invertierenden Eingang über den aus den zehnten und den elften Widerstand R10, R11 gebildeten Spannungsteiler eine Referenzspannung erhält und durch die Rückkopplung vom Ausgang auf den invertierenden Eingang über den achten Kondensator C8 ebenfalls ein Proportional-Integral Verhalten aufweist. Vom Ausgang des zweiten Operationsverstärkers OP2 wird ein Steuersignal über ein Siebglied an die Gateelektrode des Feldeffekttransistors T7 abgegeben, der als Stellwiderstand in der emitterseitigen Gegenkopplung des Vorverstärkers mit dem Transistor T6 eingeschaltet ist. Durch diese Schaltung wird der Eingangspegel auf denjenigen Spannungswert geregelt, der einem dem Spannungsabfall am elften Widerstand R11 gleichgroßen Mittelwert der Spannungsabfälle an den Widerständen R14 bzw. R15 entspricht.

Der zwischen dem Ausgang des zweiten Operationsverstärkers OP2 und der Gateelektrode des Feldeffekttransistors T7 eingeschaltete Tiefpaß enthält den achten Widerstand R8, dessen Wert dem des siebten Widerstandes R7 in der Verbindung zwischen Gate- und Drainelektrode entspricht. Unter der Voraussetzung, daß die Wechselstromwiderstände des dritten und des fünften Kondensators C3, C5 klein gegenüber den Widerständen R7 und R8 sind, tritt an der Gateelektrode des Feldeffekttransistors neben der steuernden Gleichspannung ein überlagerter Wechselspannungsanteil auf, der wegen des Spannungsteilereffektes zwischen den gleichgroßen Widerständen R7 und R8 etwa der halben Spannung zwischen Drain und Sourceelektrode des Feldeffekttransistors entspricht und das Klirrverhalten des Feldeffekttransistor-Stellgliedes erheblich verbessert.

## Patentansprüche

1. Anordnung zur Trägerrückgewinnung aus empfangenen 2 PSK-Signalen mit einem eingangsseitigen Bandpaß, dem eine Reihenschaltung aus einem Doppelweggleichrichter, einem Trägerfrequenzfilter sowie einem Frequenzteiler nachgeschaltet ist, dadurch gekennzeichnet, daß das Eingangssignal in einer Übertrageranordnung (Ü) in ein Gegentaktsignal umgeformt und dieses zur Ansteuerung eines emittergekoppelten Verstärkers (T1, T2) verwendet wird, daß die Kollektoranschlüsse der Transistoren (T1, T2) des ersten Verstärkers miteinander und mit den zusammengefaßten Emitteranschlüssen der Transistoren (T3, T4) eines zweiten emittergekoppelten Verstärkers verbunden sind, daß die Kollektoranschlüsse der Transistoren dieses zweiten Verstärkers über Kollektorwiderstände mit Betriebsspannung verbunden sind, daß der Kollektoranschluß des einen Transistors (T3) mit dem invertierenden und der Kollektoranschluß des anderen Transistors (T4) mit dem nichtinvertierenden Eingang eines ersten Operationsverstärkers (OP1) verbunden sind, daß der Ausgangsanschluß dieses Operationsverstärkers mit dem Steuereingang eines spannungsgesteuerten Oszillators (VCO) verbunden sind, dessen Ausgangsanschluß mit einem ersten Frequenzteiler (FT1) mit einem Teilerverhältnis von 2:1 verbunden ist, daß die zueinander komplementären Ausgänge des ersten Frequenzteilers (FT1) jeweils getrennt mit dem Basisanschluß der Transistoren (T3, T4) des zweiten Verstärkers verbunden sind, daß ein Ausgang des ersten Frequenzteilers (FT1) mit dem Eingang eines zweiten Frequenzteilers (FT2) mit einem Teilerverhältnis von 2:l verbunden ist, und daß an den Ausgängen dieses zweiten Frequenzteilers das gewünschte Trägersignal ansteht.

2. Anordnung zur Trägerrückgewinnung nach Patentanspruch 1, dadurch gekennzeichnet, daß zur eingangsseitigen Amplitudenregelung mit den Kollektoranschlüssen der Transistoren (T3, T4) des zweiten Verstärkers ein nichtinvertierender Eingang eines zweiten Operationsverstärkers (OP2) verbunden ist, an dessen invertierendem Eingang eine Referenzspannung anliegt und der über einen Kondensator mit dem Ausgang des zweiten Operationsverstärkers (OP2) verbunden ist, daß an diesen Ausgang über einen Tiefpaß die Gateelektrode eines Feldeffekttransistors (T7) angeschlossen ist, dessen Drain-Sourcestrecke dem Emitterwiderstand eines der Übertrageranordnung (Ü) vorgeschalteten Verstärkertransistors (T6) parallelgeschaltet ist.

3. Anordnung zur Trägerrückgewinnung nach Patentansprüchen 1 und 2, dadurch gekennzeichnet, daß die Übertrageranordnung eine mit dem Vorverstärkertransistor (T6) verbundene Primärwicklung (w1) enthält, der ein Kondensator und ein Widerstand parallel geschaltet sind, so daß sich ein Bandpaß mit einer Bandbreite ergibt, die vergleichsweise groß gegenüber der Taktfrequenz ist, daß die Übertrageranordnung (Ü) eine mittelangezapfte Sekundärwicklung (w2) enthält, daß die Mittelanzapfung über einen Widerstand mit Betriebsspannung (+U$_B$) und über eine Diode (D, T5) mit Bezugspotential verbunden ist und daß die äußeren Anschlüsse der Sekundärwicklung (w2) mit den Basisanschlüssen der Transistoren (T1, T2) des ersten Verstärkers verbunden sind.

4. Anordnung zur Trägerrückgewinnung nach Patentansprüchen 1 oder 3, dadurch gekennzeichnet, daß die Transistoren (T1 ... T4) der beiden emittergekoppelten Verstärker sowie der als Diode geschaltete fünfte Transistor (T5) in einer gemeinsamen integrierten Schaltung enthalten sind.

**Revendications**

1. Dispositif pour récupérer la porteuse à partir de signaux reçus, modulés selon une modulation MDP bivalente, comportant un filtre passe-bande situé à l'entrée en aval duquel est branché un circuit série formé d'un redresseur double alternance, d'un filtre pour la fréquence porteuse et d'un diviseur de fréquence, caractérisé par le fait que le signal d'entrée est converti en un signal symétrique dans un dispositif formant transformateur (Ü) et que ce signal est utilisé pour la commande d'un amplificateur (T1, T2) à émetteurs couplés, que les bornes de collecteur des transistors (T1, T2) du premier amplificateur sont reliées entre elles et aux bornes d'émetteur, réunies entre elles, des transistors (T3, T4) d'un second amplificateur à émetteurs couplés, que les bornes de collecteur des transistors de ce second amplificateur sont reliées à la tension de service par l'intermédiaire de résistances de collecteur, que la borne de collecteur d'un transistor (T3) est reliée à l'entrée inverseuse d'un premier amplificateur opérationnel (OP1), tandis que la borne de collecteur de l'autre transistor (T4) est reliée à l'entrée non inverseuse de cet amplificateur opérationnel, que la borne de sortie de cet amplificateur opérationnel est reliée à l'entrée de commande d'un oscillateur (VCO) commandé par la tension, dont la borne de sortie est reliée à un premier diviseur de fréquence (FT1) possédant un rapport de division égal à 2:1, que les sorties, complémentaires l'une de l'autre, du premier diviseur de fréquence (FT1) sont reliées respectivement séparément à la borne de base des transistors de base (T3, T4) du second amplificateur, qu'une sortie du premier diviseur de fréquence (ST1) est reliée à l'entrée d'un second diviseur de fréquence (ST2) possédant un rapport de division égal à 2:1, et que le signal de porteuse désiré est délivré su les sorties de ce second diviseur de fréquence.

2. Dispositif de récupération d'une porteuse selon la revendication 1, caractérisé en ce que pour la régulation d'amplitude exécutée du côté entrée, aux bornes de collecteur des transistors (T3, T4) du second amplificateur est reliée une entrée non inverseuse d'un second amplificateur opérationnel (OP2), à l'entrée inverseuse duquel est appliquée une tension de référence et qui est reliée, par l'intermédiaire d'un condensateur, à la sortie du second amplificateur (OP2), qu'à cette sortie est raccordé, par l'intermédiaire d'un filtre passe-bas, un transistor à effet de champ (T7), dont la voie drain-source est branchée en parallèle avec la résistance d'émetteur d'un transistor amplificateur (T6) branché en amont du dispositif formant transformateur (Ü).

3. Dispositif de récupération d'une porteuse suivant les revendications 1 et 2, caractérisé par le fait que le dispositif formant transformateur contient un enroulement primaire (w1), qui est relié au transistor formant préamplificateur (T6) et en parallèle avec lequel sont branchés un condensateur et une résistance de sorte que l'on obtient un filtre passe-bas possédant une largeur de bande qui est comparativement importante par rapport à la fréquence de la cadence, que le dispositif formant transformateur (Ü) comporte un enroulement secondaire (w2) à prise médiane, que la prise médiane est reliée par l'intermédiaire d'une résistance à la tension de service (+U$_B$) et, par l'intermédiaire d'une diode (D, T5), au potentiel de référence et que les bornes extérieures de l'enroulement secondaire (w2) sont reliées aux bornes de base des transistors (T1, T2) du premier amplificateur.

4. Dispositif pour la récupération d'une porteuse suivant les revendications 1 ou 3, caractérisé par le fait que les transistors (T1 ... T4) des deux amplificateurs émetteurs couplés ainsi que le cinquième transistor (T5) branché en diode sont contenus dans un circuit intégré commun.

**Claims**

1. Arrangement for carrier recovery from received 2PSK signals having an input-side bandpass filter, which has connected downstream of it a series circuit consisting of a full-wave rectifier, a carrier frequency filter and a frequency divider, characterized in that the input signal is converted into a push-pull signal in a transformer arrangement (Ü) and said push-pull signal is used for driving an emitter-coupled amplifier (T1, T2), in that the collector terminals of the transistors (T1, T2) of the first transistor are connected to one another and to the combined emitter terminals of the transistors (T3, T4) of a second emitter-coupled amplifier, in that the collector terminals of the transistors of said second amplifier are connected via collector resistors to an operating voltage, in that the collector terminal of the one transistor (T3) is connected to the inverting input of a first operational amplifier (OP1) and the collector terminal of the other transistor (T4) is connected to the non-inverting input of said first operational amplifier (OP1), in that the output terminal of this operational amplifier is connected to the control input of a voltage-controlled oscillator (VCO), the output terminal of which is connected to a first frequency divider (FT1) having a division ratio of 2:1, in that the mutually complementary outputs of the first frequency divider (FT1) are connected, in each case separately, to the base terminal of the transistors (T3, T4) of the second transistor, in that an output of the first frequency divider (FT1) is connected to the input of a second frequency divider (FT2) with a division ratio of 2:1, and in that the desired carrier signal is present at the outputs of said second frequency divider.

2. Arrangement or carrier recovery according to Patent Claim 1, characterized in that, for input-side amplitude control, a non-inverting input of a second operational amplifier (OP2) is connected to the collector terminals of the transistors (T3, T4) of the second amplifier, a reference voltage being present at the inverting input of said operational amplifier and said input being connected via a capacitor to the output of the second operational amplifier (OP2), in that the gate electrode of a field-effect transistor (T7) is connected via a low pass filter to said output, the drain-source path of said field-effect transistor being connected in parallel to the emitter resistor of an amplifier transistor (T6) connected upstream of the transformer arrangement (Ü).

3. Arrangement for carrier recovery according to Patent Claims 1 and 2, characterized in that the transformer arrangement contains a primary winding (w1) connected to the preamplifier transistor (T6), a capacitor and a resistor being connected in parallel to said primary winding so that a bandpass filter is obtained with a bandwidth which is comparatively large in relation to the clock frequency, in that the transformer arrangement (Ü) contains a centre-tapped secondary-winding (w2), in that the centre tap is connected via a resistor to an operating voltage ($+U_B$) and via a diode (D, T5) to a reference potential and in that the outer terminals of the secondary winding (w2) are connected to the base terminals of the transistors (T1, T2) of the first amplifier.

4. Arrangement for carrier recovery according to Patent Claims 1 or 3, characterized in that the transistors (T1 . . . T4) of the two emitter-coupled amplifiers as well as the fifth transistor (T5), connected as a diode, are contained in a common integrated circuit.

FIG 1

FIG 2a

FIG 2b

FIG 3